# DEMANDE DE BREVET EUROPEEN

(11) **EP 4 756 940 A1**
(43) Date de publication de la demande: **10.06.2026**
(21) Numéro de dépôt: 25220298.1
(22) Date de dépôt: 03.12.2025
(51) Int. Cl.: H01M 8/04119, B60K 6/32, H01M 8/04492, H01M 16/00, B60K 1/00

(54) **SYSTÈME MOTOPROPULSEUR POUR UN VÉHICULE AUTOMOBILE COMPRENANT UNE PILE À COMBUSTIBLE ET UN MOTEUR À COMBUSTION INTERNE**

(30) Priorité: 04.12.2024 FR 2413426
(71) Demandeur: AMPERE s.a.s., 92100 Boulougne-Billancourt (FR)
(72) Inventeur: Gerard, David, 78280 Guyancourt (FR)
(74) Mandataire: Renault Group

(57) **Abrégé**

Système motopropulseur (1) pour un véhicule automobile, comprenant :
- un réservoir (5) destiné à contenir de l'hydrogène,
- une pile à combustible (7) destinée à produire un courant électrique par réaction chimique entre de l'hydrogène en provenance du réservoir et de l'oxygène,
- un moteur à combustion interne (4) destiné à produire un couple d'entraînement et de l'eau par réaction chimique entre de l'hydrogène en provenance du réservoir et de l'oxygène,
- un premier humidificateur (21) configuré pour humidifier de l'air chargé d'oxygène en entrée de la pile à combustible, et
- une première conduite hydraulique (22) reliant une sortie d'échappement du moteur à combustion interne au premier humidificateur pour alimenter le premier humidificateur avec de l'eau issue de la réaction chimique entre l'hydrogène et l'oxygène dans le moteur à combustion interne.

## Description

### Domaine Technique de l'invention

L'invention concerne un système motopropulseur pour un véhicule automobile, le système motopropulseur fonctionnant à base d'hydrogène. L'invention porte plus précisément sur un système motopropulseur comprenant une pile à combustible et un moteur à combustion interne, la pile à combustible et le moteur à combustion interne étant destinés à consommer de l'hydrogène. L'invention porte encore sur un véhicule automobile comprenant un tel système motopropulseur. L'invention porte également sur un procédé de contrôle d'un tel système motopropulseur.

### Etat de la technique antérieure

On connaît des véhicules automobiles équipés d'un système motopropulseur comprenant un réservoir d'hydrogène, une pile à combustible, une batterie électrochimique et un moteur électrique couplé à des roues motrices du véhicule. La pile à combustible est apte à produire un courant électrique grâce à une réaction chimique d'oxydoréduction entre de l'hydrogène en provenance du réservoir et de l'oxygène contenu dans l'air ambiant. Le courant électrique produit par la pile à combustible est utilisé pour charger la batterie électrochimique. La batterie électrochimique peut ensuite alimenter le moteur électrique en courant électrique de manière à produire un couple mécanique entraînant les roues motrices. Les avantages d'une telle solution sont un rendement très important à faible puissance et l'absence d'émissions polluantes.

On connaît également des véhicules automobiles équipés d'un système motopropulseur comprenant un réservoir d'hydrogène et un moteur à combustion interne couplé à des roues motrices du véhicule. Dans ce cas, l'hydrogène en provenance du réservoir est utilisé comme carburant pour faire fonctionner le moteur à combustion interne et ainsi générer un couple moteur entraînant les roues motrices du véhicule. Les avantages d'une telle solution sont de pouvoir générer de fortes puissances avec un rendement important. De plus, un tel moteur à combustion interne produit des émission polluantes en faible quantité comparativement à un moteur à combustion interne fonctionnant avec de l'essence ou du gazole.

On connaît également par la publication CN106541816A un véhicule automobile comprenant à la fois une pile à combustible et un moteur à combustion interne, la pile à combustible et le moteur à combustion interne étant tous les deux destinés à consommer de l'hydrogène. Ce système présente néanmoins une fiabilité et des performances insuffisantes. En particulier, la pile à combustible d'un tel système motopropulseur peut être endommagée si elle est utilisée à trop forte puissance avec une humidification insuffisante.

### Présentation de l'invention

Le but de l'invention est de fournir un système motopropulseur remédiant aux inconvénients ci-dessus et améliorant les systèmes motopropulseurs connus de l'art antérieur.

Plus précisément, un premier objet de l'invention est un système motopropulseur plus performant et préservant le bon état d'une pile à combustible.

### Résumé de l'invention

L'invention se rapporte à un système motopropulseur pour un véhicule automobile, comprenant :
- un réservoir destiné à contenir de l'hydrogène,
- une pile à combustible destinée à produire un courant électrique par réaction chimique entre de l'hydrogène en provenance du réservoir et de l'oxygène,
- un moteur à combustion interne destiné à produire un couple d'entraînement et de l'eau par réaction chimique entre de l'hydrogène en provenance du réservoir et de l'oxygène,
- un premier humidificateur configuré pour humidifier de l'air chargé d'oxygène en entrée de la pile à combustible, et
- une première conduite hydraulique reliant une sortie d'échappement du moteur à combustion interne au premier humidificateur pour alimenter le premier humidificateur avec de l'eau issue de la réaction chimique entre l'hydrogène et l'oxygène dans le moteur à combustion interne.

Le système motopropulseur peut comprendre en outre un moteur électrique destiné à produire un couple d'entraînement, le moteur électrique étant destiné à être alimenté directement ou indirectement par un courant électrique produit par la pile à combustible. Le système motopropulseur peut notamment comprendre une batterie électrochimique destinée à être rechargée par un courant électrique produit par la pile à combustible et le moteur électrique peut être destiné à être alimenté par un courant électrique issu de la batterie électrochimique.

Le système motopropulseur peut comprendre un deuxième humidificateur configuré pour humidifier de l'air chargé d'oxygène en entrée de la pile à combustible, et une deuxième conduite hydraulique reliant une sortie d'air de la pile à combustible au deuxième humidificateur pour alimenter le deuxième humidificateur avec de l'eau issue de la réaction chimique entre l'hydrogène et l'oxygène dans la pile à combustible.

Le deuxième humidificateur peut comprendre une sortie d'air humidifié reliée à une entrée d'air du premier humidificateur.

La première conduite hydraulique peut être équipée d'un échangeur thermique destiné à réduire la température des gaz circulant dans la première conduite hydraulique.

La première conduite hydraulique peut être équipée d'un séparateur d'eau liquide configuré pour évacuer l'eau à l'état liquide dans la première conduite hydraulique.

La première conduite hydraulique peut être équipée d'une vanne comprenant une entrée reliée à la sortie d'échappement du moteur à combustion interne, une première sortie débouchant vers l'extérieur du système motopropulseur, et une deuxième sortie reliée au premier humidificateur.

L'invention se rapporte également à un procédé de contrôle d'un système motopropulseur tel que défini précédemment, le procédé de contrôle comprenant :
- la détection d'un besoin d'humidifier une membrane de la pile à combustible, puis
- le contrôle automatique de la vanne de sorte à orienter de l'eau produite par le moteur à combustion vers le premier humidificateur.

Le procédé de contrôle peut comprendre, préalablement à la détection d'un besoin d'humidifier la membrane de la pile à combustible, une phase lors de laquelle le moteur à combustion interne est à l'arrêt, puis, consécutivement à la détection d'un besoin d'humidifier la membrane de la pile à combustible, une activation du moteur à combustion interne pour obtenir de l'eau destinée à alimenter le premier humidificateur, le moteur à combustion interne étant découplé de toute roue motrice.

L'invention se rapporte également à un véhicule automobile comprenant un système motopropulseur tel que défini précédemment.

### Présentation des figures

Ces objets, caractéristiques et avantages de la présente invention seront exposés en détail dans la description suivante d'un mode de réalisation particulier fait à titre non-limitatif en relation avec les figures jointes parmi lesquelles :
La figure 1 est une vue schématique d'un système motopropulseur selon un mode de réalisation de l'invention.
La figure 2 est une vue schématique d'une pile à combustible du système motopropulseur.

### Description détaillée

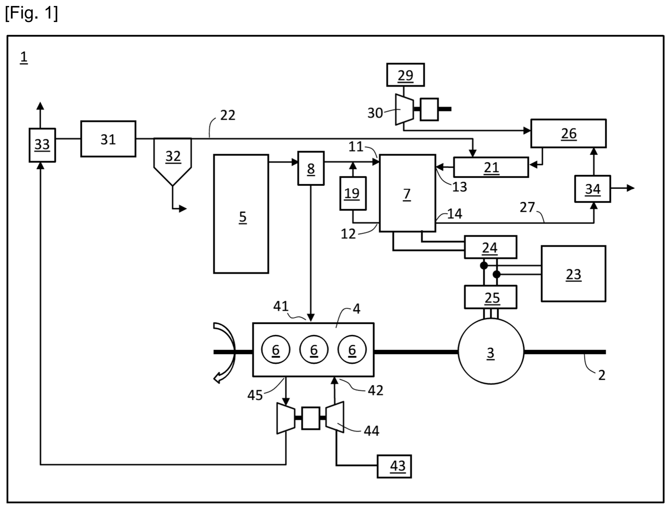

La figure 1 illustre schématiquement un système motopropulseur 1 pour un véhicule automobile selon un mode de réalisation de l'invention. Le système motopropulseur 1 peut, par exemple, être destiné à équiper un véhicule particulier, un véhicule utilitaire, un camion ou même un bus. Le système motopropulseur 1 est destiné à fournir un couple mécanique pour entraîner en rotation des roues motrices du véhicule pour faire avancer (ou reculer) le véhicule. A cet effet, le système motopropulseur 1 comprend au moins un arbre rotatif 2 destiné à être couplé aux roues motrices du véhicule.

Le système motopropulseur 1 comprend deux moteurs : d'une part le système motopropulseur 1 comprend un moteur électrique 3, c'est-à-dire un moteur destiné à être alimenté en énergie électrique pour produire un couple de rotation. D'autre part, le système motopropulseur 1 comprend un moteur à combustion interne 4, c'est à dire un moteur apte à transformer l'énergie produite par la combustion d'un gaz en un couple de rotation.

Selon le mode de réalisation présenté, le moteur électrique 3 et le moteur à combustion interne 4 sont couplé au même arbre rotatif 2, lui-même en liaison mécanique avec deux roues motrices (avant ou arrière), voire avec quatre roues motrices du véhicule. Selon un mode de réalisation alternatif, le moteur électrique 3 et le moteur à combustion interne 4 pourraient être couplés à des roues motrices différentes. Par exemple, le moteur électrique 3 pourrait être couplé à des roues motrices avant et le moteur à combustion interne 4 pourrait être couplé à des roues motrices arrière, ou inversement. Selon un mode de réalisation, les couples produits par les deux moteurs 3 et 4 sont destinés à s'additionner pour obtenir un couple résultant de plus grande valeur. Alternativement, le système motopropulseur 1 pourrait être configuré de sorte que seul l'un des deux moteurs 3 ou 4 entraîne des roues motrices du véhicule à chaque instant.

En outre, le système motopropulseur 1 comprend un réservoir 5 d'hydrogène (notamment sous la forme de dihydrogène). L'hydrogène contenu dans le réservoir 5 est destiné à être utilisé directement ou indirectement comme source d'énergie pour faire fonctionner les moteurs 3 et 4. Le réservoir 5 peut, par exemple, prendre la forme d'une ou plusieurs bonbonnes embarquées dans le véhicule. L'hydrogène peut être stocké sous pression dans le réservoir 5.

Le moteur à combustion interne 4 comprend un ensemble de chambres de combustion 6, par exemple trois chambres de combustion comme cela est représenté sur la figure 1, ou en variante tout autre nombre de chambres de combustion. Le moteur à combustion interne 4 comprend une première entrée 41 pour apporter de l'hydrogène dans chaque chambre de combustion 6. La première entrée 41 est reliée au réservoir 5 par une conduite hydraulique. Le moteur à combustion interne 4 peut comprendre des dispositifs d'injection d'hydrogène aptes à injecter une quantité d'hydrogène donnée à un instant précis dans chaque chambre de combustion. Le moteur à combustion interne 4 comprend également une deuxième entrée 42 pour apporter de l'air chargé d'oxygène (notamment sous la forme de dioxygène) dans chaque chambre de combustion. La deuxième entrée 42 peut être une simple arrivée d'air en provenance de l'air environnant le système motopropulseur 1 puisque l'air ambiant contient naturellement une importante proportion d'oxygène. Avantageusement, comme cela est représenté sur la figure 1, la deuxième entrée du moteur à combustion interne 4 est équipée d'un filtre à air 43 et/ou un compresseur d'air 44, notamment un turbocompresseur d'air. Chaque chambre de combustion 6 peut également être équipée d'un dispositif d'allumage tel qu'une bougie d'allumage. Chaque chambre de combustion est ainsi destinée à être le siège de la réaction chimique exothermique suivante :

**2H₂ + O₂ → 2H₂O + énergie**

L'énergie générée par cette réaction chimique permet de déplacer un piston dans la chambre de combustion. Le déplacement de chaque piston entraine la rotation d'un vilebrequin solidaire de l'arbre rotatif 2, par l'intermédiaire d'une bielle.

En complément de la production d'énergie, la combustion de l'hydrogène produit également de l'eau (H₂O). L'eau est mélangée aux gaz d'échappement et évacuée hors du moteur à combustion interne 4 par une sortie d'échappement 45 du moteur à combustion interne 4. Les gaz d'échappement contiennent donc principalement de l'air appauvri en oxygène et de l'eau, notamment sous forme de vapeur. Comme nous allons le voir par la suite, l'eau produite par le moteur à combustion interne 4 va être avantageusement utilisée pour améliorer le fonctionnement du système motopropulseur 1. En outre, l'énergie cinétique des gaz d'échappement du moteur à combustion peut être utilisé pour entraîner le compresseur d'air 44.

Le système motopropulseur 1 comprend par ailleurs une pile à combustible 7. La pile à combustible 7 est un générateur électrochimique produisant une tension électrique grâce à l'oxydation sur une électrode d'un combustible réducteur (en l'espèce de l'hydrogène) couplée à la réduction sur l'autre électrode d'un oxydant (en l'espèce de l'oxygène). Une pile à combustible présente donc un fonctionnement totalement différent d'un moteur à combustion interne puisqu'elle est destinée à produire un courant électrique, et non une force ou un couple mécanique.

La pile à combustible 7 est avantageusement de type « à membrane échangeuse de protons », connue également sous le nom de « PEMFC », pour l'anglais « proton exchange membrane fuel cells ». La pile à combustible 7 comprend un circuit anodique pourvu d'une première entrée 11 pour apporter de l'hydrogène et d'une première sortie 12 pour évacuer un excédent d'hydrogène. La pile à combustible 7 comprend également un circuit cathodique pourvu d'une deuxième entrée 13 pour apporter de l'air chargé en oxygène et d'une deuxième sortie 14 pour évacuer de l'air appauvri en oxygène et de l'eau.

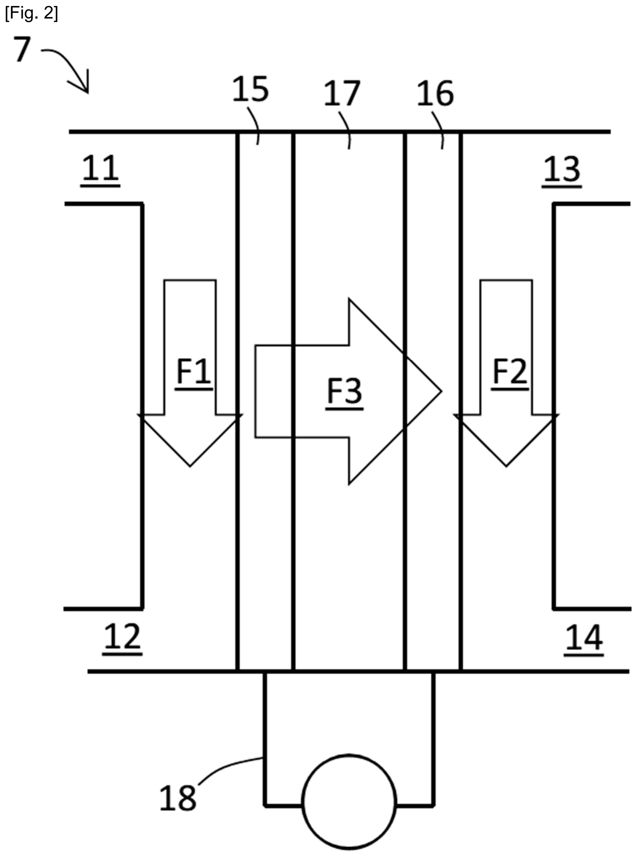

La pile à combustible 7 comprend un empilement de cellules en série, généralement dénommé par l'anglicisme « stack ». La figure 2 illustre un mode de réalisation d'une cellule de la pile à combustible 7. Chaque cellule comprend une anode 15 en contact avec le circuit anodique, une cathode 16 en contact avec le circuit cathodique, et une membrane 17 séparant l'anode 15 et la cathode 16. La membrane 17 est perméable aux protons H+ mais imperméable aux électrons. L'anode 15 et la cathode 16 de chaque cellule sont connectées en série à un circuit électrique 18.

Lorsque de l'hydrogène et de l'oxygène sont apportés dans la pile à combustible 7 respectivement par la première entrée 11 et par la deuxième entrée 13, il se produit d'une part une réaction d'oxydation de l'hydrogène au niveau du circuit anodique dont la formule chimique est :

**H₂ → 2H⁺ + 2e-**

D'autre part, les protons H+ traversent la membrane 17 de chaque cellule et se combinent avec des électrons et de l'oxygène pour former des molécules d'eau selon la réaction chimique suivante :

**4H⁺ 4e- + O₂ → 2 H₂O**

L'anode de chaque cellule atteint ainsi un potentiel électrique négatif tandis que la cathode de chaque cellule atteint un potentiel électrique positif. Il se crée ainsi une différence de potentiel électrique entre l'anode et la cathode de chaque cellule. Les cellules étant assemblées en série, les différences de potentiel entre leur anode et leur cathode s'additionnent. On parvient ainsi à établir une tension électrique de plusieurs centaines de volts aux bornes du circuit électrique 18. Comme nous le verrons par la suite, le courant électrique produit par la pile à combustible peut servir à alimenter directement le moteur électrique 3 et/ou à recharger une batterie électrochimique. Sur la figure 2, on a identifié par une première flèche F1 le parcours de l'hydrogène, par une deuxième flèche F2 le parcours de l'air, et par une troisième flèche F3 le parcours des protons H+.

La première entrée 11 de la pile à combustible 7 et la première entrée 41 du moteur à combustion interne 4 sont donc toutes les deux reliées hydrauliquement au réservoir 5. Le système motopropulseur 1 comprend une vanne 8 comprenant une entrée reliée au réservoir 5, une première sortie reliée à la première entrée 41 du moteur à combustion interne, et une deuxième sortie reliée à la première entrée 11 de la pile à combustible. La vanne 8 peut être contrôlée de sorte à alimenter en hydrogène uniquement la pile à combustible ou uniquement le moteur à combustion interne ou simultanément la pile à combustible et le moteur à combustion interne.

En remarque, l'excédent d'hydrogène au niveau de la première sortie 12 peut être avantageusement réinjecté dans la pile à combustible 7 par la première entrée 11 par une unité de recirculation 19, par exemple une pompe.

La membrane 17 peut être, par exemple, un membrane polymère. Selon un mode de réalisation, la membrane 17 comprend des alkyls perfluorés et polyfluorés (PFAS). La membrane 17 peut être par exemple une membrane en NAFION^{®} ou équivalent. Selon un autre mode de réalisation, la membrane 17 peut comprendre un polymère hydrocarboné sans PFAS. Ces dernières présentent l'avantage d'être plus résistantes aux hautes températures. Elles peuvent notamment supporter des températures de l'ordre de 100°C à 150°C, ce qui permet de faire fonctionner la pile à combustible à une température plus élevée.

La membrane 17 doit remplir de nombreuses fonctions : elle doit conduire les ions hydrogène (protons), mais pas les électrons, ce qui créerait un court-circuit dans la pile à combustible. La membrane 17 ne doit pas non plus permettre le passage des gaz d'un côté à l'autre de la pile à combustible, pour éviter le phénomène connu sous le nom de « gas crossover » (croisement de gaz). Enfin, la membrane doit résister à un environnement réducteur à l'anode et, en même temps, à un environnement oxydant à la cathode. Pour fonctionner correctement, la membrane 17 doit être humidifiée. Un déficit d'humidité de la membrane pourrait conduire à son endommagement, voire à sa destruction. En particulier plus la puissance de fonctionnement de la pile à combustible 7 augmente, plus la membrane 17 a besoin d'être humidifiée. Ainsi, lorsque l'on souhaite augmenter le courant électrique produit par la pile à combustible, il est nécessaire d'augmenter le taux d'humidité de l'air entrant dans la pile à combustible par la deuxième entrée 13.

Avantageusement, selon l'invention, l'eau produite par la combustion de l'hydrogène dans le moteur à combustion interne 4 est avantageusement utilisée pour humidifier l'air chargé d'oxygène en entrée de la pile à combustible. Ainsi, la membrane 17 peut rester suffisamment humide pour garantir le bon fonctionnement de la pile à combustible 7, même lorsque cette dernière est utilisée à pleine puissance.

A cet effet, le système motopropulseur 1 comprend un premier humidificateur 21 positionné en amont de la deuxième entrée 13, et une première conduite hydraulique 22 reliant la sortie d'échappement du moteur à combustion interne 4 au premier humidificateur 21. La première conduite hydraulique 22 est adaptée pour alimenter le premier humidificateur 21 avec de l'eau issue de la réaction chimique entre l'hydrogène et l'oxygène dans le moteur à combustion interne 4. Le premier humidificateur 21 comprend donc une première entrée d'air, une deuxième entrée pour un gaz enrichi en eau en provenance du moteur à combustion interne 4, et une sortie pour de l'air humidifié. La sortie du premier humidificateur 21 est reliée hydrauliquement à la deuxième entrée 13 de la pile à combustible 7.

Comme évoqué précédemment, le système motopropulseur 1 comprend également une batterie électrochimique 23, par exemple de type « lithium-ion », destinée à être rechargée par un courant électrique produit par la pile à combustible 7. Le moteur électrique 3 est destiné à être alimenté par un courant électrique issu de la batterie électrochimique 23. Ceci permet de faire fonctionner la pile à combustible 7 à un régime de fonctionnement optimal, indépendant du couple demandé au moteur électrique 3. La pile à combustible 7 peut ainsi être connectée électriquement à la batterie électrochimique 23 par un premier convertisseur 24 électrique, notamment de type DC/DC. La batterie électrochimique 23 peut être connectée électriquement au moteur électrique 3 par un deuxième convertisseur 25 électrique, notamment de type DC/AC. Le premier convertisseur 24 peut également être connecté directement au deuxième convertisseur 25 de sorte que le courant électrique produit par la pile à combustible 7 est directement consommé par le moteur électrique 3. Selon une variante de réalisation de l'invention, le système motopropulseur 1 pourrait être dépourvu de batterie électrochimique 23. Le moteur électrique 3 serait alors alimenté directement par un courant électrique issu de la pile à combustible, sans stockage préalable de l'énergie électrique produite par la pile à combustible sous une forme chimique. Dans cette hypothèse, les deux convertisseurs 24, 25 pourraient être remplacés par un unique convertisseur, notamment de type DC/AC, interposé entre la pile à combustible 7 et le moteur électrique 3.

Par ailleurs, le système motopropulseur 1 comprend avantageusement un deuxième humidificateur 26 destiné à humidifier l'air chargé d'oxygène en entrée de la pile à combustible 7. A l'instar du premier humidificateur 21, le deuxième humidificateur 26 comprend une première entrée d'air, une deuxième entrée pour un gaz enrichi en eau, et une sortie pour de l'air humidifié. Le deuxième humidificateur 26 se distingue du premier humidificateur 21 en ce qu'il consomme l'eau produite par le fonctionnement de la pile à combustible 7, et non l'eau produite par le fonctionnement du moteur à combustion interne 4. Ainsi, le système motopropulseur 1 comprend une deuxième conduite hydraulique 27 reliant la deuxième sortie 14 de la pile à combustible au deuxième humidificateur pour alimenter le deuxième humidificateur 26 en eau. Le deuxième humidificateur 26 permet d'améliorer encore l'humidification de l'air entrant dans la pile à combustible par la deuxième entrée 13.

Selon le mode de réalisation présenté, le premier humidificateur 21 est positionné en aval du deuxième humidificateur 26. La sortie du deuxième humidificateur 26 est donc reliée hydrauliquement à la première entrée d'air du premier humidificateur 21. Le deuxième humidificateur 26 comprend une arrivée d'air en provenance de l'environnement extérieur au système motopropulseur 1. L'arrivée d'air du deuxième humidificateur 26 peut être une simple arrivée d'air en provenance de l'air environnant le système motopropulseur. Avantageusement, comme cela est représenté sur la figure 1, l'arrivée d'air du deuxième humidificateur 26 est équipée d'un filtre à air 29 et/ou d'un compresseur d'air 30, notamment un compresseur d'air électrique.

Selon une première variante de réalisation, les positions du premier humidificateur 21 et du deuxième humidificateur 26 pourraient être inversées : le deuxième humidificateur pourrait être positionné en aval du premier humidificateur et le premier humidificateur pourrait être relié directement au deuxième dispositif d'admission d'air 28. Selon une deuxième variante de réalisation, le système motopropulseur 1 pourrait comprendre un unique humidificateur comprenant une première entrée reliée hydrauliquement au deuxième dispositif d'admission d'air 28, une deuxième entrée pour un gaz enrichi en eau issu de la sortie d'échappement du moteur à combustion interne 4, et une troisième entrée pour un gaz enrichi en eau issu de la deuxième sortie 14 de la pile à combustible 7.

Avantageusement, la première conduite hydraulique 22 est équipée d'un échangeur thermique 31 destiné à réduire la température des gaz d'échappement circulant dans la première conduite hydraulique 22. Ainsi on évite que l'humidification de l'air en entrée de la pile à combustible s'accompagne d'une élévation de la température de cette dernière. L'échangeur thermique 31 peut, par exemple, coopérer avec un circuit de refroidissement embarqué dans le véhicule et/ou comprendre des ailettes de refroidissement apte à dissiper de la chaleur dans l'air environnant le système motopropulseur 1.

De plus, la première conduite hydraulique 22 est également équipée d'un séparateur 32 d'eau liquide configuré pour évacuer l'eau à l'état liquide présent dans la première conduite hydraulique 22. Le séparateur 32 est avantageusement positionné en aval de l'échangeur thermique 31 et permet ainsi d'évacuer l'eau condensée suite au refroidissement des gaz dans l'échangeur thermique 31. Ainsi, seule l'eau à l'état de vapeur alimente le premier humidificateur ce qui améliore son fonctionnement.

Afin d'ajuster la quantité d'eau issue du moteur à combustion interne 4 délivrée au premier humidificateur 21, la première conduite hydraulique 22 est avantageusement équipée d'une première vanne 33 comprenant une entrée reliée à la sortie d'échappement du moteur à combustion interne 4, une première sortie débouchant vers l'air environnant le système motopropulseur 1, et une deuxième sortie reliée au premier humidificateur 21. La vanne peut être contrôlée dans une première position dans laquelle elle oriente la sortie d'échappement du moteur à combustion interne vers sa première sortie, ou dans une deuxième position dans laquelle elle oriente la sortie d'échappement du moteur à combustion interne vers sa deuxième sortie. La première vanne 33 est avantageusement une électrovanne. Elle est apte à être contrôlée automatiquement par une unité de commande électronique embarquée dans le véhicule de sorte à la faire passer dans sa première position ou dans sa deuxième position

Selon un mode de réalisation simplifié, la première vanne 33 peut être une vanne à commande binaire : les gaz sont soit complètement orientés vers l'extérieur du système motopropulseur 1, soit complètement orientés vers le premier humidificateur 21. Selon un mode de réalisation perfectionné, la première vanne 33 peut être une vanne proportionnelle. Une telle vanne permet d'ajuster plus finement la quantité de gaz entrant dans le premier humidificateur 1.

Lorsque la membrane 17 de la pile à combustible a besoin d'être humidifiée, la première vanne 33 peut être actionnée de sorte à orienter tout ou partie des gaz d'échappement du moteur à combustion interne 4 vers le premier humidificateur 21. La détection d'un besoin d'humidifier la membrane 17 de la pile à combustible peut être réalisée au moyen de capteurs adaptés à cet effet et connecté à l'unité de commande électronique, par exemple un capteur de température et/ou un capteur d'humidité. En variante ou en complément, la détection d'un besoin d'humidifier la membrane 17 peut résulter d'un calcul, par exemple un calcul d'analyse du point de fonctionnement de la pile à combustible. L'unité de commande électronique peut, par exemple, commander la première vanne 33 de sorte qu'elle dirige les gaz d'échappement vers le premier humidificateur 21 lorsque la puissance de la pile à combustible excède une première valeur prédéfinie et/ou lorsque la température de la pile à combustible excède une deuxième valeur prédéfinie.

Selon un mode de fonctionnement original, on peut également prévoir une activation du moteur à combustion interne 4 exclusivement dans le but d'obtenir des gaz d'échappement humides destinés à alimenter le premier humidificateur 21. Dans ce cas, le couple généré par le moteur à combustion interne 4 n'est pas utilisé pour entraîner des roues motrices du véhicule. Un mécanisme de débrayage peut être prévu à cet effet. Un tel mode de fonctionnement génère certes une perte d'hydrogène en faisant fonctionner le moteur à combustion interne sans charge mais permet d'humidifier la membrane 17 de la pile à combustible. L'humidification de la membrane 17 permet ainsi d'éviter un endommagement ou une destruction de la pile à combustible dans des situations critiques.

De même, afin d'ajuster la quantité d'eau issue de la pile à combustible 7 délivrée au deuxième humidificateur 26, la deuxième conduite hydraulique 27 est avantageusement équipée d'une deuxième vanne 34 comprenant une entrée reliée à la deuxième sortie de la pile à combustible 7, une première sortie débouchant vers l'extérieur du système motopropulseur 1, et une deuxième sortie reliée au deuxième humidificateur 26. La deuxième vanne 34 peut également être une vanne binaire ou une vanne proportionnelle. Le contrôle de la deuxième vanne 34 peut être analogue au contrôle de la première vanne 33.

## Revendications

1. Système motopropulseur (1) pour un véhicule automobile, comprenant :
- un réservoir (5) destiné à contenir de l'hydrogène,
- une pile à combustible (7) destinée à produire un courant électrique par réaction chimique entre de l'hydrogène en provenance du réservoir et de l'oxygène,
- un moteur à combustion interne (4) destiné à produire un couple d'entraînement et de l'eau par réaction chimique entre de l'hydrogène en provenance du réservoir et de l'oxygène,
- un premier humidificateur (21) configuré pour humidifier de l'air chargé d'oxygène en entrée de la pile à combustible, et
- une première conduite hydraulique (22) reliant une sortie d'échappement du moteur à combustion interne au premier humidificateur pour alimenter le premier humidificateur avec de l'eau issue de la réaction chimique entre l'hydrogène et l'oxygène dans le moteur à combustion interne.

2. Système motopropulseur selon la revendication précédente, **caractérisé en ce qu'**il comprend en outre un moteur électrique (3) destiné à produire un couple d'entraînement, le moteur électrique étant destiné à être alimenté directement ou indirectement par un courant électrique produit par la pile à combustible (7), notamment **en ce que** le système motopropulseur comprend une batterie électrochimique (23) destinée à être rechargée par un courant électrique produit par la pile à combustible et **en ce que** le moteur électrique est destiné à être alimenté par un courant électrique issu de la batterie électrochimique.

3. Système motopropulseur selon l'une des revendications précédentes, **caractérisé en ce qu'**il comprend un deuxième humidificateur (26) configuré pour humidifier de l'air chargé d'oxygène en entrée de la pile à combustible, et une deuxième conduite hydraulique (27) reliant une sortie d'air (14) de la pile à combustible au deuxième humidificateur pour alimenter le deuxième humidificateur avec de l'eau issue de la réaction chimique entre l'hydrogène et l'oxygène dans la pile à combustible.

4. Système motopropulseur selon la revendication précédente, **caractérisé en ce que** le deuxième humidificateur (26) comprend une sortie d'air humidifié reliée à une entrée d'air du premier humidificateur (21).

5. Système motopropulseur selon l'une des revendications précédentes, caractérisé en que la première conduite hydraulique (22) est équipée d'un échangeur thermique (31) destiné à réduire la température des gaz circulant dans la première conduite hydraulique.

6. Système motopropulseur selon l'une des revendications précédentes, caractérisé en que la première conduite hydraulique (22) est équipée d'un séparateur (32) d'eau liquide configuré pour évacuer l'eau à l'état liquide dans la première conduite hydraulique.

7. Système motopropulseur selon l'une des revendications précédentes, **caractérisé en ce que** la première conduite hydraulique (22) est équipée d'une vanne (33) comprenant une entrée reliée à la sortie d'échappement du moteur à combustion interne (4), une première sortie débouchant vers l'extérieur du système motopropulseur, et une deuxième sortie reliée au premier humidificateur (21).

8. Procédé de contrôle d'un système motopropulseur selon la revendication précédente, **caractérisé en ce qu'**il comprend :
- la détection d'un besoin d'humidifier une membrane (17) de la pile à combustible (7), puis
- le contrôle automatique de la vanne (33) de sorte à orienter de l'eau produite par le moteur à combustion vers le premier humidificateur.

9. Procédé de contrôle selon la revendication précédente, **caractérisé en ce qu'**il comprend, préalablement à la détection d'un besoin d'humidifier la membrane (7) de la pile à combustible (4), une phase lors de laquelle le moteur à combustion interne (4) est à l'arrêt, puis, consécutivement à la détection d'un besoin d'humidifier la membrane (17) de la pile à combustible, une activation du moteur à combustion interne pour obtenir de l'eau destinée à alimenter le premier humidificateur, le moteur à combustion interne étant découplé de toute roue motrice.

10. Véhicule automobile comprenant un système motopropulseur selon l'une des revendications 1 à 7.
